# EUROPÄISCHE PATENTSCHRIFT

(11) **EP 2 813 720 B1**
(45) Veröffentlichungstag und Bekanntmachung des Hinweises auf die Patenterteilung: **19.04.2017**
(21) Anmeldenummer: 14000564.6
(22) Anmeldetag: 18.02.2014
(51) Int. Cl.: F16C 33/14, F16C 33/12, F16C 33/04, F16C 33/62

(54) **Lagersystem**
bearing system
Système de palier

(30) Priorität: 09.03.2013 DE 102013004151; 09.03.2013 DE 202013002328 U
(43) Veröffentlichungstag der Anmeldung: 17.12.2014
(73) Patentinhaber: Wieland-Werke AG, 89079 Ulm (DE)
(72) Erfinder: Merkel, Till, 89231 Neu-Ulm (DE); Lehnert, Christian, 89077 Ulm (DE); Thumm, Gerhard, 89155 Erbach (DE); Voggeser, Volker, 89250 Senden (DE)

(56) Entgegenhaltungen:
- EP-A2- 0 195 205
- DE-A1- 2 926 080
- DE-A1- 3 640 430

## Beschreibung

Die Erfindung betrifft ein Lagersystem mit einer Lagerpaarung aus einem Lager und einem Gegenlaufpartner, wobei auf mindestens einer Lauffläche der Lagerpaarung eine Beschichtung zur Verbesserung der Lagereigenschaften aufgebracht ist.

Es ist bekannt, dass Laufflächen von Lagerpaarungen beschichtet werden, um die Lagereigenschaften zu verbessern. Insbesondere dienen Beschichtungen als Einlaufschichten, wobei die Einlaufschicht Maßtoleranzen an den Bauteilen des Lagers ausgleicht. In Lagern von Verbrennungsmotoren werden Hartstoffschichten aus diamantähnlichem Kohlenstoff (DLC-Schichten) verwendet, wie beispielsweise in den Dokumenten WO 96/04485, DE 10 2004 018 921 A1, DE 10 2005 043 217 A1, DE 10 2006 015 888 A1 und DE 10 2008 025 681 A1 beschrieben ist. DLC-Schichten sind jedoch sehr hart und neigen zu einem ungleichmäßigen Auftrag. Dies hat beispielsweise am oberen Lager eines Pleuels zur Folge, dass der Kolbenbolzen in die Lagerbuchse einläuft, was zu erhöhtem Verschleiß und einer Vergrößerung des Lagerspiels führt. Ferner sind DLC-Schichten teuer.

In Lagersystemen werden auch Schichten aus Siliziumdioxid (SiO₂) eingesetzt. In einigen Fällen dienen sie als Zwischenschicht oder als Haftvermittlerschicht, wie beispielsweise in den Dokumenten DE 29 26 080 A1, US 6,499,881 B2 und DE 100 18 688 A1 beschrieben ist. Laufrollen in Galvanisierungsbädern werden mit Oberflächenschichten versehen, die SiO₂ enthalten und Schichtdicken von mehreren Mikrometern aufweisen. In JP 08053749 A und JP 06228724 wird vorgeschlagen, solche Schichten durch thermisches Spritzen aufzubringen. Derart dicke Schichten eigenen sich nicht für Lagersysteme, bei denen eine hohe Passgenauigkeit der Lagerpartner notwendig ist.

Aus der Druckschrift DE 36 40 430 A1 ist ein mit keramischem Material beschichtetes Werkstück bekannt. Auf der Oberfläche eines metallischen Trägermaterials wird mittels einer Kohlenstoff enthaltenden Argongas-Atmosphäre über eine Plasmaabscheidung eine erste Haftschicht erzeugt. Diese enthält Kohlenstoff in hoher Konzentration. Auf dieser ersten Schicht wird eine weitere keramische Schicht abgeschieden, die beispielsweise aus Siliziumoxid besteht. Die gasförmigen Ausgangssubstanzen dieser Siliziumoxidschichten enthalten SiH4 und Sauerstoff, die mittels Plasma-CVD Verfahren aktiviert und abgeschieden werden. Durch die erste Kohlenstoff-Haftschicht sind die keramischen Schichten stabil auf dem metallischen Trägermaterial fixiert.

Der Erfindung liegt die Aufgabe zugrunde, verbesserte Lagersysteme anzugeben. Insbesondere soll durch die geeignete Beschichtung auf mindestens einer Lauffläche das Einlaufverhalten des Lagersystems verbessert werden. Die Beschichtung soll für Lagersysteme mit hoher Passgenauigkeit geeignet sein.

Die Erfindung wird bezüglich eines Lagersystems durch die Merkmale des Anspruchs 1 wiedergegeben. Die weiteren rückbezogenen Ansprüche betreffen vorteilhafte Aus- und Weiterbildungen der Erfindung.

Die Erfindung schließt Lagersysteme mit einer Lagerpaarung aus mindestens einem Lager und mindestens einem Gegenlaufpartner ein. Erfindungsgemäß ist auf mindestens einer Lauffläche der Lagerpaarung eine Beschichtung aufgebracht, welche eine Schicht umfasst, deren Hauptbestandteil amorphes SiO₂ ist.

Die Erfindung geht dabei von der Überlegung aus, Laufflächen von Lagerpaarungen mit einer Schicht, deren Hauptbestandteil amorphes SiO₂ ist, zu beschichten, um die Lagereigenschaften zu verbessern. Der Begriff Hauptbestandteil beschreibt in diesem Zusammenhang, dass die Schicht zu mehr als 50 Gew-%, bevorzugt zu mindestens 80 Gew-% aus amorphem SiO₂ besteht. Unter amorphem SiO₂ werden im Rahmen dieser Erfindung SiO₂-Strukturen verstanden, die aus Monomermolekülen oder kleinen Oligomeren aufgebaut sind, die von geeigneten Precursoren gebildet werden und zur Struktur reagieren, nicht jedoch amorphe SiO₂-Strukturen, die über einen schmelzflüssigen Zustand, wie beispielsweise aus Schmelzefluss oder durch thermisches Spritzen, dargestellt werden.

Aufgrund ihrer Eigenschaften sind amorphe SiO₂-Schichten für die Verwendung auf Laufflächen von Lagerpaarungen besser geeignet als kristalline SiO₂-Schichten. Wegen der fehlenden Fernordnung der Atome sind amorphe SiO₂-Schichten elastischer als kristalline, weniger spröde und neigen weniger dazu, vom Substrat abzuplatzen. Bei der Bildung einer erfindungsgemäßen amorphen SiO₂-Schicht wird die Schicht auf dem Substrat aufgebaut, indem sich lokal, aber flächenhaft gleichmäßig einzelne reaktive Monomermoleküle oder kleine Oligomere anlagern, die von geeigneten Precursoren gebildet werden. Die Adhäsion der substratnahen SiO₂-Strukturen zum Substrat ist stärker als die Kohäsion innerhalb der darüber liegenden SiO₂-Strukturen. In Lagersystemen werden amorphe SiO₂-Schichten bevorzugt auf metallische Substrate aufgebracht.

Das erfindungsgemäße Lagersystem kann sowohl als Gleitlager als auch als Wälzlager ausgeführt sein. Die Vorteile der amorphen SiO₂-Schicht kommen insbesondere bei Gleitlagern zur Wirkung.

In bevorzugter Ausgestaltung der Erfindung kann die Schicht zu mindestens 90 Gew.-% aus amorphem SiO₂ bestehen.

Die Schicht enthält Verunreinigungen, die aufgrund des Beschichtungsprozesses unvermeidbar sind. Hierzu zählen organische Reste aus den Precursoren sowie Wasserstoffatome und OH-Gruppen.

In bevorzugter Ausgestaltung der Erfindung kann die Schicht aus amorphem SiO₂ als Oberflächenschicht aufgebracht sein. Bei einem Schichtsystem, das aus mehreren unterschiedlichen Schichten auf dem Substrat besteht, wird als Oberflächenschicht die funktionelle Schicht bezeichnet, die am weitesten vom Substrat entfernt ist. Sie stellt also die oberste funktionelle Schicht dar und ist damit die Schicht, die mit dem anderen Partner der Lagerpaarung unmittelbar oder mittelbar tribologisch in Wechselwirkung steht. Die hohe Elastizität der Schicht aus amorphem SiO₂ ermöglicht in idealer Weise die Kompensation von Unebenheiten auf den Laufflächen der Lagerpaarung. Die Erfindung schließt auch Ausführungsformen ein, bei denen auf die Schicht aus amorphem SiO₂ eine weitere, nicht-funktionelle Deckschicht aufgebracht ist. Insbesondere fallen hierunter Deckschichten, die aufgrund ihrer geringen Dicke keine oder nur eine unwesentliche Funktionalität erwarten lassen. Dies ist insbesondere für Deckschichten mit einer Dicke kleiner 10 nm anzunehmen.

Vorteilhafterweise kann bei dem erfindungsgemäßen Lagersystem die Schicht aus amorphem SiO₂ eine Einlaufschicht sein. Eine Einlaufschicht dient dazu, fertigungsbedingte Formabweichungen des Lagers und/oder des Gegenlaufpartners auszugleichen. Die Einlaufschicht kann zu diesem Zweck während des Einlaufvorgangs zumindest teilweise abgetragen werden. Bei einer amorphen SiO₂-Schicht ist die Adhäsion der substratnahen SiO₂-Strukturen zum Substrat stärker als die Kohäsion innerhalb der darüber liegenden SiO₂-Strukturen. Diese Eigenschaft ist maßgeblich für die Verwendung als Einlaufschicht, da kleinste Elemente der Beschichtung abgetragen werden können, ohne dass die Schicht flächig abgetragen wird. Ferner sind die abgetragenen Elemente der Schicht elastisch und nicht hart. Sie haben keinen negativen Einfluss auf die Laufeigenschaften der Lagerpaarung, selbst wenn sie zwischen den Laufflächen verbleiben. Die Vorteile der amorphen SiO₂-Schicht als Einlaufschicht kommen insbesondere bei Gleitflächen von Gleitlagern zur Wirkung.

In bevorzugter Ausgestaltung der Erfindung kann die Schicht aus amorphem SiO₂ eine Dicke von mindestens 10 nm und höchstens 500 nm aufweisen. Eine Dicke von weniger als 10 nm ist nicht ausreichend, um die vorteilhaften Eigenschaften der Schicht zu realisieren. Bei Schichtdicken über 500 nm neigt die Schicht zur Versprödung. In besonders bevorzugter Ausgestaltung der Erfindung kann die Schicht aus amorphem SiO₂ eine Dicke von mindestens 100 nm und höchstens 300 nm aufweisen. Bei einer Schichtdicke von mindestens 100 nm kommen die Vorteile der amorphem SiO₂-Schicht voll zur Wirkung. Andererseits steigen mit zunehmender Schichtdicke die Beschichtungszeit und folglich die Prozesskosten. Eine Obergrenze von 300 nm erweist sich als wirtschaftlich. Darüber hinaus kann es von Vorteil sein, die Dicke der Schicht auf maximal 250 nm zu begrenzen, da sie dann bei der Fertigung der zu beschichteten Bauteile nicht in deren Abmessungen berücksichtigt werden muss.

In bevorzugter Ausgestaltung der Erfindung kann die Dicke der Schicht aus amorphem SiO₂ auf 90% der beschichteten Fläche um nicht mehr als +/- 10% von der mittleren Dicke der Schicht abweichen. Amorphe SiO₂-Schichten zeichnen sich durch eine sehr gleichmäßige Schichtdicke aus. Lokale Schwankungen der Schichtdicke, beispielsweise Überhöhungen an Kanten der Bauteile, treten nur in unbedeutendem Maß auf. Folglich brauchen derartige Schwankungen der Schichtdicke in den Fertigungstoleranzen des zu beschichteten Bauteils nicht berücksichtigt werden. Die beschichteten Bauteile können problemlos montiert werden. Sie zeichnen sich durch ein gleichmäßiges Einlaufverhalten und gleichmäßiges tribologisches Verhalten aus.

Die Schicht aus amorphem SiO₂ enthält ferner organische Reste. Hierzu zählen neben organischen Resten aus den Precursoren auch funktionelle Zusätze, die die Oberflächenenergie und damit die Benetzungseigenschaften des Systems beeinflussen können. Die Benetzung der Laufflächen durch Schmiermittel ist in diesem Zusammenhang von Bedeutung. Vorteilhafterweise kann die Schicht aus amorphem SiO₂ ferner weitere keramische Oxide enthalten. Keramische Oxide, wie beispielsweise Al₂O₃, ZrO₂ und TiO₂, können zur Modifikation der Schichthärte beitragen. Auf diese Weise ist es möglich, die Eigenschaften der Schicht aus amorphem SiO₂ entsprechend den genauen Anforderungen der jeweiligen Anwendung anzupassen.

Die Erfindung wird anhand des folgenden Ausführungsbeispiels näher erläutert. Ein Kolbenbolzen aus Stahl wurde auf seiner Oberfläche mit einer 300 nm dicken Schicht aus amorphem SiO₂ beschichtet. Der beschichtete Kolbenbolzen wurde als Verbindung eines Pleuels mit einem Kolben in einen Verbrennungsmotor eingebaut. Im Pleuelauge war ein Gleitlager aus einer Kupferlegierung eingebaut. Der Motor wurde auf einem Prüfstand für Verbrennungsmotoren einem Einlauftest unterzogen. Als Vergleichsobjekt diente ein Motor, bei dem der Kolbenbolzen mit DLC (Hartstoffschicht aus diamantähnlichem Kohlenstoff) beschichtet war. Das mit amorphem SiO₂ beschichtete Lagersystem zeigt bei optischer und elektronenoptischer Untersuchung nach dem Test deutlich weniger Verschleiß. Ferner war die Zunahme des Lagerspiels beim dem mit amorphen SiO₂-beschichteten Bolzen kaum messbar, während sich das Lagerspiel beim DLC-beschichteten Bolzen ungefähr verdoppelt hat.

## Patentansprüche

1. Lagersystem mit einer Lagerpaarung aus mindestens einem Lager und mindestens einem Gegenlaufpartner, wobei auf mindestens einer Lauffläche der Lagerpaarung eine Beschichtung aufgebracht ist, **dadurch gekennzeichnet,**
- **dass** die Beschichtung eine Schicht umfasst, deren Hauptbestandteil amorphes SiO₂ ist und,
- **dass** die Schicht aus amorphem SiO₂ ferner organische Reste enthält.

2. Lagersystem gemäß Anspruch 1 **dadurch gekennzeichnet, dass** die Schicht zu mindestens 90 Gew.-% aus amorphem SiO₂ besteht.

3. Lagersystem gemäß Anspruch 1 **dadurch gekennzeichnet, dass** die Schicht aus amorphem SiO₂ als Oberflächenschicht aufgebracht ist.

4. Lagersystem gemäß Anspruch 1 **dadurch gekennzeichnet, dass** die Schicht aus amorphem SiO₂ eine Einlaufschicht ist.

5. Lagersystem gemäß Anspruch 1, **dadurch gekennzeichnet, dass** die Schicht aus amorphem SiO₂ eine Dicke von mindestens 10 nm und höchstens 500 nm aufweist.

6. Lagersystem gemäß Anspruch 5, **dadurch gekennzeichnet, dass** die Schicht aus amorphem SiO₂ eine Dicke von mindestens 100 nm und höchstens 300 nm aufweist.

7. Lagersystem gemäß Anspruch 1, **dadurch gekennzeichnet, dass** die Dicke der Schicht aus amorphem SiO₂ auf 90% der beschichteten Fläche um nicht mehr als +/- 10% von der mittleren Dicke der Schicht abweicht.

8. Lagersystem gemäß Anspruch 1, **dadurch gekennzeichnet, dass** die Schicht aus amorphem SiO₂ ferner weitere keramische Oxide enthält.

## Claims

1. Bearing system having a bearing pairing comprising at least one bearing and at least one parallel partner, wherein a coating is applied to at least one running face of the bearing pairing, **characterised in that**
- the coating comprises a layer whose main component is amorphous SiO₂ and
- **in that** the layer of amorphous SiO₂ further contains organic residues.

2. Bearing system according to claim 1, **characterised in that** the layer comprises up to 90% by weight of amorphous SiO₂.

3. Bearing system according to claim 1, **characterised in that** the layer of amorphous SiO₂ is applied as a surface layer.

4. Bearing system according to claim 1, **characterised in that** the layer of amorphous SiO₂ is a running-in layer.

5. Bearing system according to claim 1, **characterised in that** the layer of amorphous SiO₂ has a thickness of at least 10 nm and a maximum of 500 nm.

6. Bearing system according to claim 5, **characterised in that** the layer of amorphous SiO₂ has a thickness of at least 100 nm and a maximum of 300 nm.

7. Bearing system according to claim 1, **characterised in that** the thickness of the layer of amorphous SiO₂ over 90% of the coated face deviates by no more than ±10% from the mean thickness of the layer.

8. Bearing system according to claim 1, **characterised in that** the layer of amorphous SiO₂ further contains additional ceramic oxides.

## Revendications

1. Système de palier comprenant un accouplement de paliers constitué d'au moins un palier et d'au moins un partenaire de roulement opposé, dans lequel un revêtement est déposé sur au moins une surface de roulement de l'accouplement de paliers, **caractérisé en ce que** :
- le revêtement comprend une couche dont le composant principal est la SiO₂ amorphe et,
- la couche de SiO₂ amorphe contient en outre des résidus organiques.

2. Système de palier selon la revendication 1, **caractérisé en ce que** la couche se compose à au moins 90 % en poids de SiO₂ amorphe.

3. Système de palier selon la revendication 1, **caractérisé en ce que** la couche de SiO₂ amorphe est déposée sous forme de couche superficielle.

4. Système de palier selon la revendication 1, **caractérisé en ce que** la couche de SiO₂ amorphe est une couche de rodage.

5. Système de palier selon la revendication 1, **caractérisé en ce que** la couche de SiO₂ amorphe présente une épaisseur d'au moins 10 nm et d'au maximum 500 nm.

6. Système de palier selon la revendication 5, **caractérisé en ce que** la couche de SiO₂ amorphe présente une épaisseur d'au moins 100 nm et d'au maximum 300 nm.

7. Système de palier selon la revendication 1, **caractérisé en ce que** la couche de SiO₂ amorphe ne diverge pas de plus de ± 10 % de l'épaisseur moyenne de la couche sur 90 % de la surface revêtue.

8. Système de palier selon la revendication 1, **caractérisé en ce que** la couche de SiO₂ amorphe contient en outre d'autres oxydes céramiques.
